# EUROPEAN PATENT APPLICATION

(11) **EP 4 541 640 A1**
(43) Date of publication of application: **23.04.2025**
(21) Application number: 23306819.6
(22) Date of filing: 17.10.2023
(51) Int. Cl.: B60L 53/53, B60L 53/63, H02J 7/00

(54) **STATION POWER PREDICTION AND BATTERY SIZING**

(71) Applicant: TotalEnergies OneTech, 92400 Courbevoie (FR)
(72) Inventor: Santos Pereira, Guilherme, 92078 PARIS LA DEFENSE (FR); Beroni, Pierre, 92078 PARIS LA DEFENSE (FR); Ferrouillat, Théau, 92078 PARIS LA DEFENSE (FR); de Lepinau, Louis, 92078 PARIS LA DEFENSE (FR); Deydier, Jean-Baptiste, 92078 PARIS LA DEFENSE (FR)
(74) Representative: Plasseraud IP

(57) **Abstract**

The present disclosure relates to a method for sizing a charging station for electric vehicles, in view of operating the charging station at a future period of time T, the charging station being installed at the location of a fuel station operated over a past or current period of time N, said charging station comprising at least one electric charging point and being connected to an electrical network, the method being implemented by a device comprising a circuit and a memory, the memory comprises consumption data specific to the previously operated fuel station for the period of time N comprising a set of fuel consumption sessions, and at least one charging power probability distribution as a function of vehicle categories; the method comprises:
/a/ converting fuel consumption sessions into a set of equivalent electric charging sessions;
Ibl for each equivalent electric charging session, determining an average charging power based on the charging power probability distribution and the equivalent electric charging session;
/c/ determining (320) a sizing of the at least one compensation battery of the charging station from the average charging powers of the equivalent electric charging sessions determined for the period T, so that the compensation battery allows to temporally increase the maximum load capacity of the electrical network when an electrical load demand of the charging station is superior to the maximum load capacity of the electrical network.

## Description

### Technical Field

This disclosure pertains to the field of electric charging station sizing. More particularly, the present disclosure relates to a method and a device for sizing a charging station for electric vehicles over a future period.

### Background Art

Over the past few decades, the world has seen a significant evolution in the field of mobility, with an exponential increase in the number of electric vehicles on the roads.

This phenomenon is mainly driven by the growing awareness of environmental issues and challenges posed by greenhouse gas emissions from traditional internal combustion vehicles. This rapid evolution in the number of electric vehicles is also the result of major technological advances, government incentives and changes in consumer attitudes.

Indeed, advances in battery technology have greatly improved the viability of electric vehicles and allowed electric vehicles to compete with their internal combustion counterparts in terms of performance, range and operating cost.

However, while the demand for electric vehicles increases, the implementation of infrastructure to meet this demand remains a major challenge. Indeed, several challenges must be overcome to meet the needs of electric vehicle users, such as the availability of charging stations, their location, charging times, waiting times before being able to charge, or even the different types of connectors.

The present disclosure meets at least some of those needs.

### Summary

It is a proposed a method for sizing a charging station for electric vehicles, in view of operating the charging station at a future period of time T, the charging station being installed at the location of a fuel station operated over a past or current period of time N, said charging station comprising at least one electric charging point and being connected to an electrical network, the method being implemented by a device comprising a circuit and a memory, said memory may comprise :
- consumption data specific to the previously operated fuel station for the period of time N, comprising a set of fuel consumption sessions; and
- at least one charging power probability distribution as a function of vehicle categories;
the method may comprise:
/a/ converting fuel consumption sessions into a set of equivalent electric charging sessions;
/b/ for each equivalent electric charging session, determining an average charging power based on the charging power probability distribution and the equivalent electric charging session;
/c/ determining a number of electric charging point(s) of the charging station from the average charging powers of the equivalent electric charging sessions determined for the period T.

By electric vehicle, it may be understood a vehicle whose propulsion to move is ensured by one or more electric motors. Preferably, by electric vehicle, it may be understood a vehicle whose propulsion to move is only ensured by one or more electric motors.

By at the location of the fuel station, it may be understood at the same location of the fuel station, or in a location around the location of the fuel station, or a location in the same area that the location of the fuel station. Further, a same location or area can be interpreted as an area around a fuel station where the same vehicles could go for refueling or charging. Further, a same location or area can be interpreted as an area around a fuel station where the same vehicles could go for refueling or charging.

By average charging power, it may be understood the average power used to charge the battery of an electric vehicle.

In one or several embodiments, the method may further comprise:
/b1/ determining a load for the charging station for the period T from the average charging powers determined for the equivalent electric charging sessions;
/c/ determining the number of electric charging point(s) of the charging station from the load determined for the period T.

In one or several embodiments, each fuel consumption session may comprise at least one piece of data relating to a quantity of fuel supplied during the session for a vehicle, and in /a/ each consumption session of fuel may be converted into an equivalent electric charging session by applying a conversion of the quantity of fuel supplied to the vehicle into a quantity of energy supplied for said vehicle.

In one or several embodiments, each quantity of fuel in liter may be converted into a quantity of energy in kWh according to a conversion ratio R_{conv} comprised between 0,5 and 10, preferably between 1 and 6, more preferably between 1,5 and 3.

In one or several embodiments, the conversion ratio R_{conv} may further be determined according to a given geographical area.

In one or several embodiments, in /a/, a number X_{fuel} of fuel consumption sessions may randomly be selected from the set of fuel consumption sessions over the period of time N.

In one or several embodiments, the number of fuel consumption sessions randomly selected from the set may further be determined from an evolution ratio Rₑᵥ between the number of electric vehicles in circulation and the total number of vehicles in circulation during the period T.

In one or several embodiments, a harmonization factor K may be applied on the quantity of supplied energy of each equivalent electric charging session, and the number of equivalent electric charging sessions of the set may further be determined from an inverse of the harmonization factor 1/K.

In one or several embodiments, the harmonization factor may be comprised between 0.1 and 2, preferably between 0.25 and 1.

In one or several embodiments, each equivalent electric charging session may be respectively associated to a vehicle category.

In one or several embodiments, the memory may further comprise at least one vehicle categories probability distribution as a function of a power consumption, the method further may comprise :
/a1/ for each equivalent electric charging session, determining a vehicle category based on the vehicle categories probability distribution and the equivalent electric charging session.

By power consumption, it may be understood a power consumed by the user when charging his vehicle, and which may correspond to a quantity of supplied energy.

In one or several embodiments, the category of each equivalent electric charging session may be determined by a draw based on the quantity of supplied energy of the equivalent electric charging session and the vehicle categories probability distribution.

In one or several embodiments, the average charging power of each equivalent electric charging session may be determined by a draw based on the vehicle category of the equivalent electric charging session and the charging power probability distribution.

In one or several embodiments, each vehicle category may be associated to a maximum charging power and/or a maximum battery capacity of the vehicle type.

In one or several embodiments, the memory may further comprise a set of segmented charging sessions over a past or current period of time M, the charging sessions being segmented by vehicle categories, and the at least one charging power probability distribution as the function of vehicle categories may be determined based on the segmented charging sessions.

In one or several embodiments, the at least one vehicle categories probability distribution as a function of a power consumption may be determined based on the segmented charging sessions.

In one or several embodiments, each segmented charging session may comprise a piece of data relative to a maximum battery capacity and/or a maximum charging power and/or at least one piece of data relative to a time stamp.

In one or several embodiments, each session of fuel consumption may comprise at least one piece of data relative to a time stamp.

In one or several embodiments, the number of charging points of the charging station may also be determined so that to take into account at least one piece of data from at least one data chosen among:
- the maximum load capacity of the electrical network;
- the maximum power allowed per charging point;
- a queuing time between at least two electric vehicles at a charging point;
- one or a plurality of compensation batteries with a predetermined sizing.

In one or several embodiments, the number of charging points of the charging station may also be determined as fulfilling at least one criterion.

In one or several embodiments, the at least one criterion may comprise at least one of the following:
- the number of charging points is determined such as a cumulative user waiting time for performing a charging session is lower than a determined threshold;
- the number of charging points is determined such as a cumulative amount of energy not delivered is lower than a determined threshold;
- the number of charging points is determined such as a cumulative number of impacted users is lower than a determined threshold;
- the number of charging points is determined such as a cumulative of saturation of the maximum load capacity of the electrical network is lower than a determined threshold;
- the number of charging points is determined such as an occupancy rate of all charging points is lower than a determined threshold.

By a user waiting time, it may be understood the waiting time for a user before being able to start his charging session and/or the waiting time to partially and/or fully charge the battery of his electric vehicle.

The present disclosure also relates to a computer program comprising instructions which, when the program is executed by a computer, cause the computer to carry out the method of the present disclosure.

The present disclosure may also relate to a device for sizing at least one battery of a charging station for electric vehicles, in view of operating the charging station at a future period of time T, said charging station having at least one electric charging point connected to an electrical network having a maximum load capacity, said charging station being installed at the location of a fuel station operated over a past or current period of time N, the device comprising a memory, said memory comprising :
- consumption data specific to the previously operated fuel station for the period of time N, comprising a set of fuel consumption sessions; and
- at least one charging power probability distribution as a function of vehicle categories;
the device comprising:
a/ a circuit for converting fuel consumption sessions into a set of equivalent electric charging sessions;
/b/ a circuit for determining an average charging power based on the charging power probability distribution and the equivalent electric charging session for each equivalent electric charging session;
/c/ a circuit for determining a number of electric charging point(s) of the charging station from the average charging powers of the equivalent electric charging sessions determined for the period T.

In another aspect of the present disclosure, it is proposed a computer-readable non-transient recording medium on which a software is registered to implement the present disclosure as defined here when the software is executed by a processor.

The present disclosure also relates to a method for sizing at least one compensation battery of a charging station for electric vehicles, in view of operating the charging station at a future period of time T, the charging station being installed at the location of a fuel station operated over a past or current period of time N, said charging station comprising at least one electric charging point and being connected to an electrical network, the method being implemented by a device comprising a circuit and a memory, said memory may comprise :
- consumption data specific to the previously operated fuel station for the period of time N, comprising a set of fuel consumption sessions; and
- at least one charging power probability distribution as a function of vehicle categories;
the method may comprise :
/a/ converting fuel consumption sessions into a set of equivalent electric charging sessions;
/b/ for each equivalent electric charging session, determining an average charging power based on the charging power probability distribution and the equivalent electric charging session;
c/ determining a sizing of the at least one compensation battery of the charging station from the average charging powers of the equivalent electric charging sessions determined for the period T, so that the compensation battery allows to temporally increase the maximum load capacity of the electrical network when an electrical load demand of the charging station is superior to the maximum load capacity of the electrical network.

By electric vehicle, it may be understood a vehicle whose propulsion to move is ensured by one or more electric motors. Preferably, by electric vehicle, it may be understood a vehicle whose propulsion to move is only ensured by one or more electric motors.

By "at the location of the fuel station", it may be understood at the same location of the fuel station, or in a location around the location of the fuel station, or a location in the same area that the location of the fuel station. Further, a same location or area can be interpreted as an area around a fuel station where the same vehicles could go for refueling or charging. Further, a same location or area can be interpreted as an area around a fuel station where the same vehicles could go for refueling or charging.

By average charging power, it may be understood the average power used to charge the battery of an electric vehicle.

In one or several embodiments, the method may further comprise:
/b1/ determining a load for the charging station for the period T from the average charging powers determined for the equivalent electric charging sessions;
/b2/ detecting at least one load peak in the load having an amplitude superior to the maximum load capacity of the electrical network;
/c/ determining the sizing of the at least one compensation battery of the charging station from the load determined for the period T and said at least one load peak.

In one or several embodiments, the method may further comprise:
/b3/ determining a statistical distribution of the at least one load peak for the period T based on the load for the charging station for the period T;
/c/ determining the sizing of the at least one compensation battery of the charging station from the statistical distribution of the at least one load peak.

In one or several embodiments, each fuel consumption session may comprise at least one piece of data relating to a quantity of fuel supplied during the session for a vehicle, and in /a/ each consumption session of fuel may be converted into an equivalent electric charging session by applying a conversion of the quantity of fuel supplied to the vehicle into a quantity of energy supplied for said vehicle.

In one or several embodiments, each quantity of fuel in liter may be converted into a quantity of energy in kWh according to a conversion ratio R_{conv} comprised between 0,5 and 10, preferably between 1 and 6, more preferably between 1,5 and 3.

In one or several embodiments, the conversion ratio may be further determined according to a given geographical area.

In one or several embodiments, in /a/, a number Xruei of consumption sessions may randomly be selected from the set of fuel consumption sessions over the period of time N.

In one or several embodiments, the number of fuel consumption sessions randomly selected from the set may further be determined from an evolution ratio Rₑᵥ between the number of electric vehicles in circulation and the total number of vehicles in circulation during the period T.

In one or several embodiments, a harmonization factor K may be applied on the quantity of supplied energy of each equivalent electric charging session, and the number of equivalent electric charging sessions of the set may further be determined from an inverse of the harmonization factor 1/K.

In one or several embodiments, the harmonization factor may be comprised between 0.1 and 2, preferably between 0.25 and 1.

In one or several embodiments, each equivalent electric charging session may be respectively associated to a vehicle category.

In one or several embodiments, the memory may further comprise at least one vehicle categories probability distribution as a function of a power consumption, the method may further comprise :
/a1/ for each equivalent electric charging session, determining a vehicle category based on the vehicle categories probability distribution and the equivalent electric charging session.

By power consumption, it may be understood a power consumed by the user when charging his vehicle, and which may correspond to a quantity of supplied energy.

In one or several embodiments, the category of each equivalent electric charging session may be determined by a draw based on the quantity of supplied energy of the equivalent electric charging session and the vehicle categories probability distribution.

In one or several embodiments, the average charging power of each equivalent electric charging session may be determined by a draw based on the vehicle category of the equivalent electric charging session and the charging power probability distribution.

In one or several embodiments, each vehicle category may be associated to a maximum charging power and/or a maximum battery capacity of the vehicle type.

In one or several embodiments, the memory may further comprise a set of segmented charging sessions over a past or current period of time M, the charging sessions being segmented by vehicle categories, and the at least one charging power probability distribution as the function of vehicle categories may be determined based on the segmented charging sessions.

In one or several embodiments, the at least one vehicle categories probability distribution as a function of a power consumption may be determined based on the segmented charging sessions.

In one or several embodiments, each segmented charging session may comprise a piece of data relative to a maximum battery capacity and/or a maximum charging power and/or at least one piece of data relative to a time stamp.

In one or several embodiments, each session of fuel consumption may comprise at least one piece of data relative to a time stamp.

In one or several embodiments, the sizing of the at least one compensation battery of the charging station may also be determined so that to take into account at least one piece of data from at least one data chosen among:
- the maximum load capacity of the electrical network;
- the maximum power allowed per charging point;
- a sizing of the charging station;
- one or a plurality of existing compensation batteries with a predetermined sizing;
- a pre-sizing of at least one compensation battery.

In one or several embodiments, the sizing of the at least one compensation battery is determined as fulfilling at least one criterion.

In one or several embodiments, the at least one criterion may comprise at least one of the following:
- the sizing of the compensation battery is determined as such the level of coverage in power or in energy is greater than a determined threshold;
- the sizing of the compensation battery is determined such that the average use of the battery is greater than a determined threshold;
- the sizing of the compensation battery is determined such as a cumulative number of impacted users is lower than a determined threshold;
- the sizing of the compensation battery is determined such as a cumulative number of cycles of the compensation battery is lower than a determined threshold;
- the sizing of the compensation battery is determined such as a cumulative amount of energy not delivered is lower than a determined threshold.

In one or several embodiments, the sizing of the compensation battery may be defined by a capacity and a power of the compensation battery.

The present disclosure also relates to a computer program comprising instructions which, when the program is executed by a computer, cause the computer to carry out the method of the present disclosure.

The present disclosure also relates to a device for sizing at least one compensation battery of a charging station for electric vehicles, in view of operating the charging station at a future period of time T, said charging station having at least one electric charging point connected to an electrical network having a maximum load capacity, said charging station being installed at the location of a fuel station operated over a past or current period of time N, the device may comprise a memory, said memory may comprise :
- consumption data specific to the previously operated fuel station for the period of time N, comprising a set of fuel consumption sessions, and
- at least one charging power probability distribution as a function of vehicle categories,
the device may comprise:
a/ a circuit for converting fuel consumption sessions into a set of equivalent electric charging sessions,
/b/ a circuit for determining an average charging power based on the charging power probability distribution and the equivalent electric charging session for each equivalent electric charging session,
/c/ a circuit for determining a sizing of the at least one compensation battery of the charging station from the average charging powers of the equivalent electric charging sessions determined for the period T, so that the compensation battery allows to temporally increase the maximum load capacity of the electrical network when an electrical load demand of the charging station is superior to the maximum load capacity of the electrical network.

In another aspect of the present disclosure, it is proposed a computer-readable non-transient recording medium on which a software is registered to implement the present disclosure as defined here when the software is executed by a processor.

### Brief Description of Drawings

Other features, details and advantages will be shown in the following detailed description and on the figures, on which:
**Fig. 1**

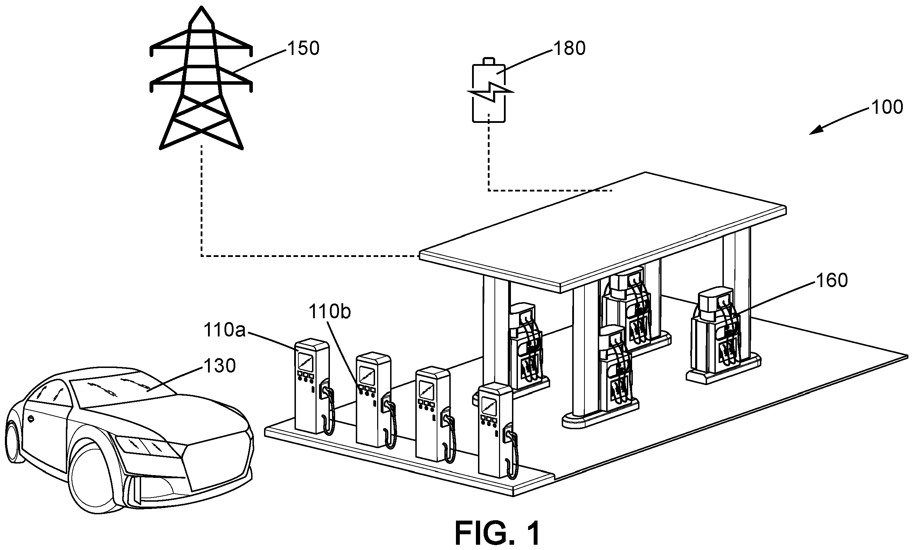

   [Fig. 1] illustrates a schematic view of a sized charging station for a future period T.
**Fig. 2a**

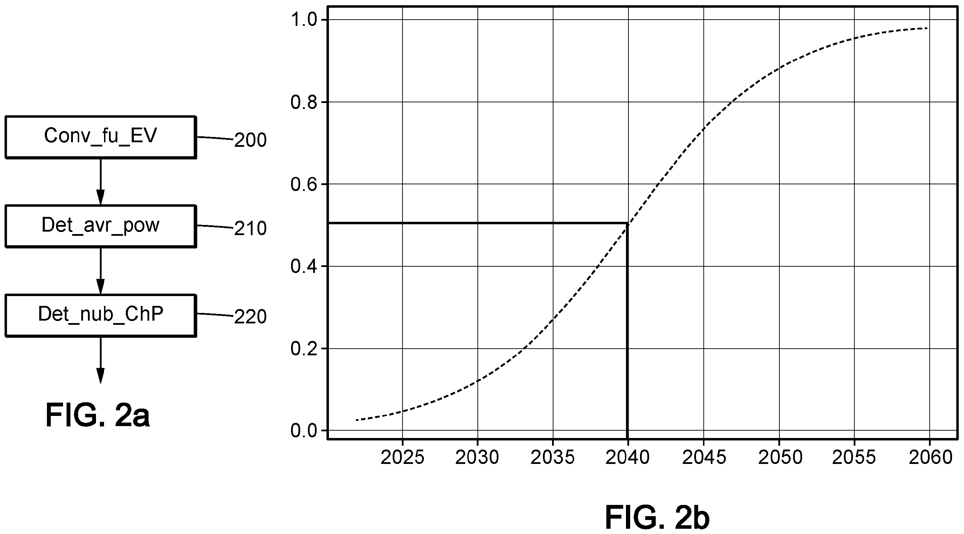

   [Fig. 2a] illustrates a flowchart of a method for sizing a charging station for electric vehicles.
**Fig. 2b**
   [Fig. 2b] illustrates the evolution of the number of electric vehicles over the time.
**Fig. 2c**

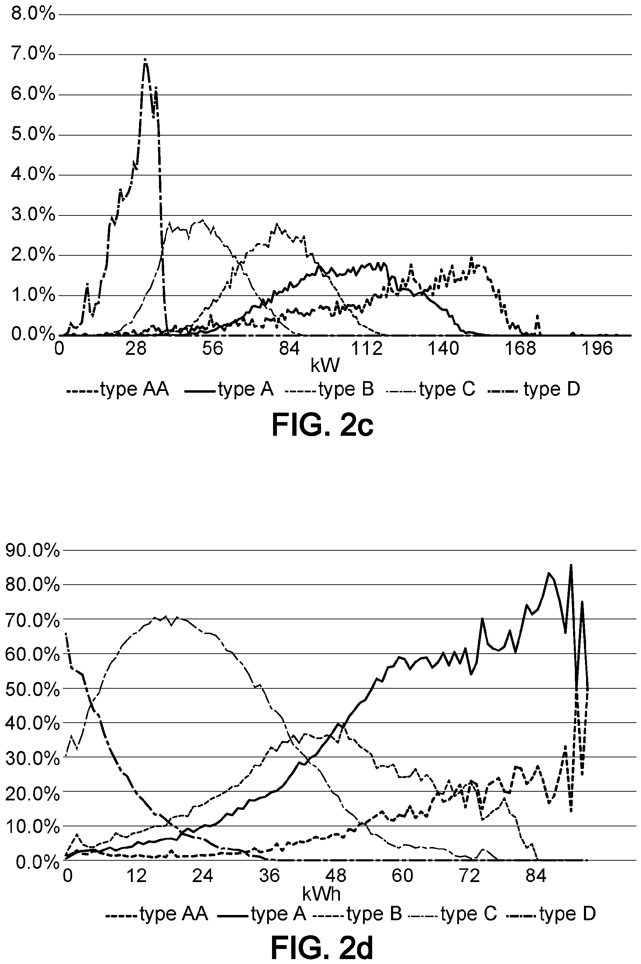

   [Fig. 2c] illustrates a charging power probability distribution as a function of vehicle categories.
**Fig. 2d**
   [Fig. 2d] illustrates a vehicle categories probability distribution as a function of a power consumption.
**Fig. 2e**

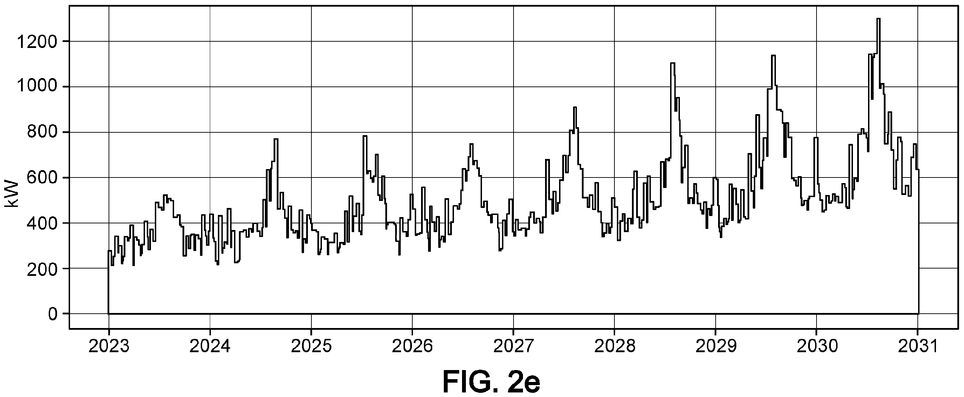

   [Fig. 2e] illustrates a load over a future period such eight future years for the charging station.
**Fig. 2f**

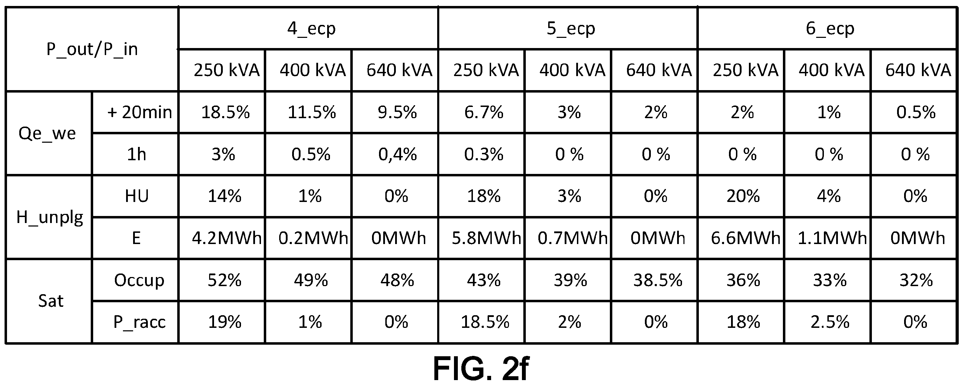

   [Fig. 2f] illustrates results of simulations of different configurations of charging stations having a given number of charging points.
**Fig. 3a**

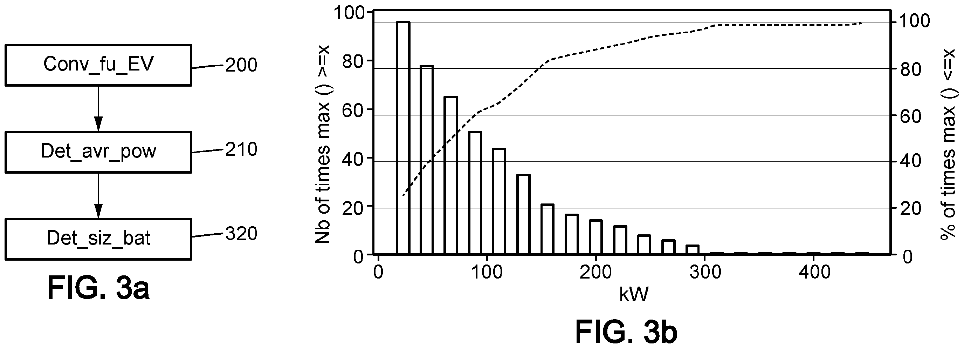

   [Fig. 3a] illustrates a flowchart of a method for sizing the compensation battery of a charging station.
**Fig. 3b**
   [Fig. 3b] illustrates a statistical distribution of at least one load peak of a determined load for a charging station over a period T.
**Fig. 3c**

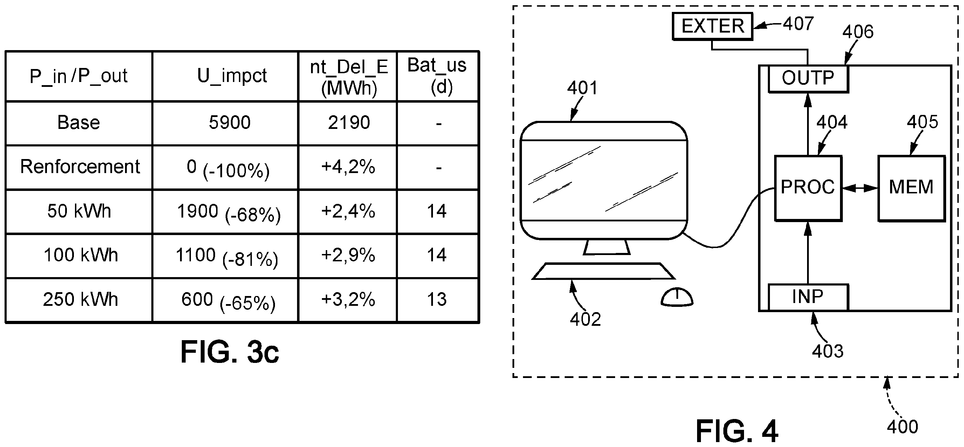

   [Fig. 3c] illustrates results of simulations of different configurations of charging stations having at least one compensation battery.
**Fig. 4**
   [Fig. 4] illustrates a possible embodiment for a device that enables the present disclosure.

### Description of Embodiments

Figure 1 illustrates a schematic view of a sized charging station for a future period T.

The sized charging station (or sized recharge station or charging station) 100 may originally be a fuel station which is destined to be modified or replaced in a future period, or a charging station which must be installed in a sector neighbouring a fuel station (in a future period).

The sized charging station 100 may comprise one or a plurality of charging points 110a, 110b, intended to charge batteries, such as batteries of electric vehicles 130 or hybrid vehicles for instance, and may be connected to an electrical network 150 which may present a maximum capacity of load. Each charging point may be configured to charge a battery of a vehicle (electric or hybrid).

Each charging point 110a, 110b may be configured to provide a maximal electric power, for instance between 50 and 300 kVA.

For instance, the electric network 150 may have a maximal capacity of load comprised in a range of 200 and 1000 kVA (1 kVA is equivalent to 1 kW) for instance. Of course, this range is an example, the maximal capacity of load may depend on multiple factors (design of the electric network, type of source supplying the electrical network, etc.) and therefore the electric network may also have a maximal capacity out of this range.

Thus, the sized charging station 100 may be sized so as take into account the maximal load capacity of the electric network 150, so that a total request in electrical power at a given moment of the charging station is inferior to the maximal capacity of load of the electrical network, and/or inferior to the maximal capacity of load predicted for this charging station and/or superior to the maximal capacity of load of the electrical network during a short time.

For instance, the number of charging points and/or the maximal electric power for at least one charging point may depend (or may be sized based on) on the maximal capacity of load of the electrical network.

By electric vehicle, it may be understood a vehicle whose propulsion to move is ensured by one or more electric motors. Preferably, by electric vehicle, it may be understood a vehicle whose propulsion to move is only ensured by one or more electric motors.

Furthermore, when the charging station is intended to complete a previously operated fuel station (over a past or current period of time N), the charging/fuel station may still keep at least one fuel pump 160 (or not). Likewise, when the charging station is intended to complete or replace a previously operated fuel station (over a past or current period of time N), the fuel station may have one or a plurality of initial charging points which may be kept in the charging/fuel station and taken into account for the sizing of the charging station.

In addition, the sized charging station may comprise one or a plurality of compensation battery 180 which may be connected to the electric network (and connected to the sized charging station), and which may be configured to temporally increase the maximum load capacity of the electrical network. For instance, such a situation may happen when the electrical load request of the charging station (i.e. all the electrical equipment including all the charging points) at a given moment is superior to the maximum load capacity of the electrical network.

Typically, such situation may occur when the number of batteries of electric vehicles being simultaneously charged at a given moment is too high for the electric network, and/or, when the cumulative power demand (or request) of the charging points at a given moment is too high regarding the maximal capacity of the electric network.

For instance, each compensation battery may be sized so that its capacity may be in a range comprised between 100 kWh and 2000 kWh (2 MWh). Of course, this range is an example, the capacity of a compensation battery may depend on multiple factors (design of the electric network, expected use, evolution of technology, etc.) and therefore their features such the capacity or/and charging power may also be out of this range, for instance inferior to 100 kWh or superior to 2 MWh for the capacity.

The sized charging station such as the one presented in figure 1 may have been sized by using at least one method of the present disclosure.

Figures 2a to 2f illustrate a method for sizing a charging station for electric vehicle in one or several embodiments.

In particular, Figure 2a illustrates a flowchart of the method for sizing a charging station for electric vehicles, the figure 2b illustrates the evolution of the number of electric vehicles over time, the figure 2c illustrates a charging power probability distribution as a function of vehicle categories, figure 2d illustrates a vehicle categories probability distribution as a function of a power consumption, figure 2e illustrates a load over a future period such eight future years for the charging station and figure 2f illustrates results of simulations of different configurations of charging stations having a given number of charging points.

In reference to the figure 2a, the charging station to be sized (such charging station presented at figure 1) may be sized in view of operating the charging station at a future period of time T, the charging station being installed at the location of a fuel station operated over a past or current period of time N, and may comprise at least one electric charging point and being connected to an electrical network.

By "at the location of the fuel station", it may be understood at the same location of the fuel station, or in a location around the location of the fuel station, or a location in the same area that the location of the fuel station. Further, a same location or area can be interpreted as an area around a fuel station where the same vehicles could go for refueling or charging. Further, a same location or area can be interpreted as an area around a fuel station where the same vehicles could go for refueling or charging.

The method may be implemented by a device which may comprise a circuit and a memory.

The memory may store consumption data specific to the previously operated fuel station for the past or current period of time N, and comprising a set of fuel consumption sessions.

For instance, the set of fuel consumption sessions may be relative to the fuel station operated over the past or a current period of time N, such as over one year (present or past) or a plurality of years (present and/or past), for instance eight years.

Furthermore, the memory may store at least one charging power probability distribution as a function of vehicle categories.

According to one or several embodiments, the consumption data and/or the least one charging power probability distribution as a function of vehicle categories may have been previously acquired, and stored in the memory of the device implementing the method, or in a remote server accessible by a telecommunication network for instance.

In addition, in one or several embodiments, rather than the consumption data be specific to the previous operated fuel station or in combination with the consumption data specific to the previous operated fuel station, the consumption data may be specific to an operated fuel station, over a past or current period of time N, having the same context (e.g. environmental, frequency of users, location, etc.) than the operated fuel station to replace/upgrade by a charging station. In addition, the consumption data may be specific to a plurality of operated fuel stations located at different positions in an area over a past or current period of time N. For example, when a charging station has to be implemented in an area or a location where no fuel station operated, the consumption data of a plurality operated fuel stations may be used.

### 1. Conversion of fuel vehicles frequentation into electric vehicles frequentation

The method for sizing a charging station for electric vehicle may comprise converting 200 fuel consumption sessions into a set of equivalent electric charging sessions.

Thus, at least some fuel consumption sessions of the set of fuel consumption sessions may be converted into an equivalent electric charging session so that to form a set of equivalent electric charging sessions comprising X_{CH} equivalent electric charging sessions.

According to one or several embodiments, each fuel consumption session may comprise at least one piece of data relating to a quantity (or amount) of fuel supplied during the session for a vehicle, and each consumption session of fuel may be converted into an equivalent electric charging session by applying a conversion of the quantity (amount) of fuel (e.g. in liter for instance, also called litre) supplied to the vehicle into a quantity (or amount) of energy (e.g. in kWh) supplied for said vehicle.

For instance, each fuel consumption session may be relative to a full filling of a vehicle's fuel tank. Therefore, the amount (quantity) of energy obtained after conversion may be relative to the charging of a battery of an electric vehicle, and as if the battery were fully charged.

In addition, each session of fuel consumption may comprise at least one piece of data relative to a time stamp.

For instance, the time stamp of the fuel consumption session may be determined from the end time and/or the start time of the refueling of the vehicle. Such time stamp may be converted into a time stamp of the equivalent electric charging session comprising a start time and an end time for charging the electric vehicle for the equivalent electric charging session. According to another example, the end time and the start time of the refueling of the vehicle (or of the fuel consumption session) may be the same, as well as the end time and the start time of the equivalent electric charging session.

According to one or several embodiments, each quantity of fuel in liter may be converted in a quantity of energy (supplied energy) in kWh according to a conversion ratio R_{conv} comprised between 0,5 and 10, preferably between 1 and 6, more preferably between 1,5 and 3.

For instance, this conversion ratio R_{conv} may be determined from the average autonomy of the fuels (petrol, diesel, LPG) to find the energy ratio between fuel and electric in kWh. For instance, by considering that an average autonomy of diesel of 6L/100km, of petrol of 7L/100km, of LGP of 7,5km/100, and an average autonomy of 15kWh/100km for electric vehicles, it may be determined an average ratio of 2 between the autonomies. Such ratio may be then used to convert quantity of fuel in liter into kWh.

Furthermore, according to one or several embodiments, the step of converting fuel consumption sessions into equivalent electric charging sessions may comprise randomly selecting a number X_{fuel} of fuel consumption sessions from the set of fuel consumption sessions over the period of time N.

In one or several embodiments, the number X_{fuel} of fuel consumption sessions randomly selected from the set may further be determined from an evolution ratio Rₑᵥ between the number of electric vehicles in circulation and the total number of vehicles (such automobile vehicles) in circulation during the period T.

In reference to the figure 2b, the evolution ratio Rₑᵥ may be based on a prediction curve (or function) describing the evolution of the number of electric vehicles in circulation regarding the total number of vehicles in circulation in a given geographical area according to time for instance. This prediction curve may be based, for instance, on the environmental context and/or on the growth in the proportion of electric cars in circulation over the past period and present period, etc. The environmental context may comprise, for instance, an obligation imposed by the national laws of a country to have a certain number of electric vehicles in circulation with regard to the total number of vehicles in circulation and/or the awareness of vehicle users of the impact on the ecology that thermal combustion vehicles can have.

Thus, for instance, for the period T (or future period) corresponding to the year 2040, the evolution ratio Rₑᵥ between the number of electric vehicles in circulation and the total number of vehicles in circulation will be superior or equal to 50%.

Furthermore, the evolution ratio may also depend on a given geographical area. Indeed, for instance, depending on the country or/and given geographical area, environmental context and/or and consumer habits regarding electric vehicle may be different.

In order to take into account a technologically possible maximum capacity/power of battery of the electric vehicles over the period T, in one or several embodiments, a harmonization factor K may be applied on the quantity of energy of each equivalent electric charging session, and the number of equivalent electric charging sessions may be further determined from the inverse of the harmonization factor 1/K.

Indeed, when converting the quantity of fuel supplied to a thermal vehicle into the quantity of energy supplied to an electric vehicle, this may be assumed that the batteries of electric vehicles (or capacities of the batteries) are technologically capable of storing such a quantity of energy. However, this maximum battery storage capacity largely may depend on the storage technology available at a given time.

For example, if the quantity of fuel for each session of fuel corresponds to a full tank of fuel as described previously, the equivalent quantity of energy supplied obtained by converting the quantity of fuel may correspond to the battery being fully charged of an electric vehicle. However, the equivalent quantity of energy obtained by the conversion may be greater than the storage capacity of the batteries at an instant T.

Thus, advantageously, this harmonization factor K allows it to be taken into account, but since it is important to maintain the energy supplied requirement of the user, the inverse of the harmonization factor 1/K may be applied so as to increase traffic at the user's charging station.

In other words, electric vehicles have a lower storage capacity at a given time, so they will have to charge/recharge more often. Such harmonization factor K and its inverse may allow to apply this principle.

According to one or several examples, the harmonization factor K may be comprised between 0.1 and 2, and preferably between 0.25 and 1.

Thus, for example, if it is considered a harmonization factor K= ½ (0.5) applied to all the quantities of determined supplied energy, an inverse factor of 1/K= 2 may be applied to the number of equivalent electric charging sessions, so as to artificially increase the number of equivalent electric charging sessions constituting the set, thus increasing the frequentation of electric cars at the charging station.

Furthermore, the inverse of the harmonization factor 1/K may be applied in another way.

In one or several embodiments, the inverse of the harmonization factor 1/K may be applied by selecting further fuel consumption sessions so that the total number of equivalent electric charging session be equal to X_{CH} = Xfuei/K.

The fuel consumption sessions further selected may, for instance, follow a statistical distribution of the quantities of energy determined from the equivalent electric charging sessions converted from the initial fuel consumption sessions.

Thus, for example, if it is considered a harmonization factor of ½ applied to all the quantities of energy determined by conversion (/a/), and there were initially 100 fuel consumption sessions, 100 other fuel consumption sessions may be further selected from the set of fuel sessions such that the total number of equivalent electric charging session be equal to X_{CH} = 200.

Once the fuel consumption sessions are converted into a set of equivalent electric charging sessions, the method of sizing a charging station may further comprise a step 210 of determining, for each equivalent electric charging session, an average charging power based on the charging power probability distribution and the equivalent electric charging sessions.

In one or several embodiments, each equivalent electric charging session may be respectively associated to a vehicle category. For instance, the vehicle category of each equivalent electric charging session may be based on the quantity of energy determined for the equivalent electric charging session, and/or a predetermined database.

By average charging power, it may be understood the average power used to charge the battery of an electric vehicle, for instance relative to a vehicle category.

In reference to the figure 2c, each vehicle category of the distribution may cover a range of average charging power. For instance, the vehicle category D may cover the range from 0 to 40 kW, and the vehicle category C may cover the rang from 0 to 90 kW, etc.

Thus, from the vehicle category of each equivalent electric charging session and the charging power probability distribution, an average charging power may be determined.

For instance, for an equivalent electric charging session associated to the vehicle category D, the possible average charging powers (for the battery of such vehicle category) are in the range from 0 to 40 kW.

As for a same vehicle category a plurality of average charging powers may be available, in one or several embodiments, the average charging power of each equivalent electric charging session may be determined by a draw according to the vehicle category of the equivalent electric charging session and the charging power probability distribution.

Such charging power probability distribution may have been initially stored in the memory and/or may have been previously determined based on further data and then stored in the memory. For instance, the charging power probability distribution as the function of vehicle categories may have been previously determined from charging sessions segmented by vehicle categories over a past or current period of time M and which may be stored in the memory.

The set of segmented charging sessions (or segmented recharge sessions or segmented electric charging sessions) may have been determined from charging sessions of electric vehicle over the past or current period of time M for instance. Indeed, over the past of current period of time M (e.g.one or a plurality of years), one or a plurality of fuel stations may already have comprised one or a plurality of charging points, and therefore data relating to types of electric vehicles such charging power, and/or battery capacities may have been aggregated over the past of current period of time M.

Such aggregated data may be used for categorizing each equivalent electric charging session.

Thus, each vehicle category of the segmented charging sessions may be associated to a maximum charging power and/or a maximum battery capacity of the vehicle type.

Thus, for instance, vehicle category AA of the segmented charging sessions may correspond to high-end car with a battery having a range of maximum charging power between 160 and 190 kW and/or a maximum capacity between 60 and 100 kWh (figure 2d). Vehicle category C of the segmented charging sessions may correspond to a city car with a battery having a range of maximum charging power between 40 and 90 kW and/or a maximum capacity between 15 and 50 kWh, etc.

According to an example, the definition of each vehicle category may have been determined beforehand from public or governmental data.

In the case of the equivalent electric charging sessions, the vehicle category which may be associated to equivalent electric charging session may be defined by the maximum battery capacity of the vehicle which may correspond to the quantity of energy (supplied or power consumption) obtained by conversion (since the conversion from the quantity of fuel considers a full refills of the reservoir).

As described previously, the vehicle category of each equivalent electric charging session may be based on the quantity of energy (or quantity of supplied energy or power consumption) determined for the equivalent electric charging session, and/or based on a predetermined database.

However, the vehicle category of each equivalent electric charging session may also be determined from at least one vehicle categories probability distribution as a function of a power consumption stored in the memory, and the method of sizing a charging station may further comprise, for each equivalent electric charging session, determining a vehicle category based on the vehicle categories probability distribution and the equivalent electric charging session.

Figure 2d illustrates such vehicle categories probability distribution as a function of a power consumption.

From this vehicle categories probability distribution, a vehicle category may be determined for each equivalent electric charging session. For instance, the quantity of energy (or quantity of supplied energy or power consumption) determined from the conversion of the quantity of fuel for the equivalent electric charging session may be used for determining the vehicle category of each equivalent electric charging session.

According to an example, an equivalent electric charging session having a quantity of fuel of 30 Liters converted in a quantity of supplied energy of 60 kWh according to a ratio 2 may be categorized in different categories such category AA, A, B, C, D.

As for a same quantity of energy, several vehicle categories are available, in one or several embodiments, the category of each equivalent electric charging session may be determined by a draw based on the quantity of supplied energy of the equivalent electric charging session and the vehicle categories probability distribution.

Alternatively, as for the power probability distribution, such least one vehicle categories probability distribution as a function of a power consumption may been previously determined and then stored in the memory. Furthermore, in the similar way that the power probability distribution, the vehicle categories probability distribution as a function of a power consumption may be determined from the segmented charging sessions.

Therefore, based on the above distributions determined from historical data, each equivalent electric charging session may be associated with a vehicle category and an average charging power and/or a maximum battery capacity.

From these equivalent electric charging sessions, which may represent future attendance over a future period T at the charging station, and determined average charging powers, different types of sizing of the charging station may be determined, such as a sizing of the number of charging points in the charging station and/or a sizing of at least one compensation battery for example.

In addition, it may also be possible to determine a load for the charging station for the period T from the average charging powers determined for the equivalent electric charging sessions.

Figure 2e illustrates an example of such load for a period of eight future years, represented in the form of a load curve. Such load curve may correspond to the load for 8 years in a future period of the charging station.

According to one or several examples, the load curve may be constructed by aggregation of all equivalent electric charging sessions. For instance, the aggregation may be based on a piece of data relative time stamp associated to each equivalent electric charging session. Such piece of data relative time stamp of an equivalent electric charging session may correspond to the time stamp of the session of fuel consumption converted into the equivalent electric charging session. The time stamp may comprise a couple of start/end time or/and a couple of start time/duration of charging. Such duration may be determined from the power consumption and the average charging power of each equivalent electric charging session for instance.

According to one or several embodiments, the load curve may describe the load of the charging station over time, such period T (future period for instance), information relative to the variation of the load (in power or energy) over time, such period T (future period for instance), and/or information relative to the number of users charging their electric vehicle at a given moment.

### 2. Sizing of the Charging station - charging points

Following the conversion of fuel vehicles frequentation into electric vehicles frequentation described at section 1, the method of sizing the charging station may further comprise determining 220 a number of electric charging point(s) of the charging station from the average charging powers of the equivalent electric charging sessions determined for the period T.

Determining the number of charging points may comprise simulating the response of a charging station according to a given configuration with regard to a previously determined load and transcribing this response by a set of output parameters.

The determined load may be considered as an input parameter (P_int) and may be:
- the load determined for the charging station under a load curve for instance (such presented in figure 2e), and/or
- the average charging powers of the equivalent electric charging sessions;
- and optionally respectively associated with the timestamp data of each equivalent electric charging sessions.

Other input parameters may be used to determine the sizing of the charging station such as at least one piece of data among:
- the maximum load capacity of the electrical network;
- the maximum power allowed per charging point;
- a maximum acceptable queuing time between at least two electric vehicles at a charging point, which can be estimated based on statistics or user feedbacks;
- a maximum allowed charging power for an electric vehicle at a given moment;
- one or a plurality of compensation batteries with a predetermined sizing.

The maximum power allowed per charging point as an input parameter may make it possible to simulate the response of a charging station which will be able to lower the load allowed by charging points during an influence peak of electric vehicles (or load peak) so as to avoid exceeding the maximum load capacity of the electrical network and/or so as to absorb a peak of influence by limiting the maximum possible power allowed of one or more charging points in order to homogenize the total charging power available of the charging station on all the charging points.

In addition, alternatively or in combination with the above, maximum power allowed per charging point as an input parameter makes it possible to take into consideration a charging station configuration which would have different maximum charging powers depending on the charging points. Indeed, some charging points may have electrical charging powers (or charging powers) of up to or greater than 175 kW, while some charging points may have electrical charging powers of less than 60 kW.

The allowed charging power for a vehicle electric at a given moment may be deduced from the following relation :
allowed charging power for a vehicle electric = Min(max_charger_power ; max_grid_power / nb_EV) With
- Nb_EV : the number of electric vehicles charging at the same time t;
- max_charger_power: maximum level of power that can be delivered by one charging point;
- max_grid_power : maximum capacity of the electric network.

The available power may correspond to the load (electric) capacity of a charging point and/or the load (electric) capacity of the electric network.

In reference to figure 2f illustrating results of simulations of different configurations of charging stations having a given number of charging points, the output parameters (P_out) may be at least one output parameter among :
- a cumulative number of impacted users;
- a cumulative user waiting time (Qe_we) for performing a charging session;
- a cumulative amount of energy not delivered (E);
- a cumulative of a percentage of saturation of the maximum load capacity of the electrical network (P_racc);
- an occupancy rate (Occup) of all charging points.

By a user waiting time, it may be understood the waiting time for a user before being able to start his charging session and/or the waiting time to partially and/or fully charge the battery of his electric vehicle.

According to one or several embodiments, in the case of sizing the charging points, the definition of an impacted user may be : a user may be considered as impacted (impacted user) when the user has performed a hot unplug. By hot unplug, it is meant the charging socket of an electric vehicle is pulled out of the charging point when charging the vehicle. For example, such a situation may happen when a user of electric vehicle does not want to wait any longer because the loading (or charging) of his vehicle takes too long (in time), or because he has to do something else, and he has already lost enough time in the waiting queue.

Threshold values may be defined to consider that a user will perform a hot unplug during charging his vehicle. For instance, if after an increasing superior to 10% in the initial charging duration, the user is missing at least 3 kWh (supplied energy), he is considered impacted, and likely to achieve a hot unplug. Of course, another threshold values may be used for considering that a user will perform a hot unplug. For instance, the increasing in the initial charging duration may be superior to 20%, 30% or 50 % and the missing of supplied energy may be at least 2, 5, 10, 15, or 20 kWh.

According to one or several embodiments, in the case of sizing the charging points, the definition of the impacted user, in combination with the previous definition or taken alone, may be : a user may be considered as impacted (impacted user), when a user waiting time for performing a charging session is superior to a predetermined threshold, and/or when a difference (in energy) between the quantity of energy expected by the user for his electric vehicle during his recharging session for an expected recharging session time and the quantity of energy actually supplied is superior to a predetermined threshold. For instance, each user of the number of impacted users may correspond to a user for whom the user waiting time for performing a charging session is superior or equal to 20 min or superior or equal to 30% higher than an average user waiting time, or/and the difference in energy is superior to 5 kWh. Of course, another threshold values may be used for considering that a user will be impacted. For instance, the user waiting time for performing a charging session may be superior or equal to 10, 30, 50 min or superior or equal to 10, 20, 40% higher than an average user waiting time, or/and a difference in energy which may be superior or equal to 2, 10, 15, 20, 30. kWh.

The cumulative amount of energy not delivered may comprise the energy not delivered because of hot unplugs or/and energy not delivered because user(s) has (have) already lost enough time in the waiting queue and prefer to leave the charging station without charging his (their) electric vehicle.

On the basis of these output parameters, it may then be possible to define at least one criterion that the configuration of the charging station must respect (or fulfill). Of course, a plurality of criteria may also be defined or used.

For example, the criterion may be among others:
- the number of charging points is determined such as a cumulative number of impacted users is lower than a determined threshold;
- the number of charging points is determined such as a cumulative user waiting time for performing a charging session is lower than a determined threshold;
- the number of charging points is determined such as a cumulative amount of energy not delivered is lower than a determined threshold;
- the number of charging points is determined such as a cumulative of saturation of the maximum load capacity of the electrical network is lower than a determined threshold;
- the number of charging points is determined such as an occupancy rate of all charging points is lower than a determined threshold.

With reference to figure 2f, different configurations of a charging station (having input parameter P_in) in a given sector/area and for a future period T may be tested by simulating the response of each configuration regarding the average charging powers of the equivalent electric charging sessions or/and the load determined according to the present disclosure as an input parameter, and optionally taking into account a second input parameter from those listed above.

For example, three configurations of a charging station may be simulated, a first comprising four charging points (4_ecp), a second comprising five charging points (5_ecp), and a third comprising six charging points (6_ecp).

In addition, each configuration may be simulated by taking into account a connection to an electrical network according to three possible configurations of maximum network load capacity, a first at 250 kVA, a second at 400k VA, and a third at 640 kVA, which leads to nine responses of simulations of a charging station to be fully determined.

Thus, each response of a simulated configuration may output a plurality of output parameters (P_out) such as those listed above.

For example, in the case of figure 2f, the criteria based on the output parameters (such as those presented previously) to determine a suitable/optimal configuration for the charging station may be:
- a cumulative user waiting time for performing a charging session is lower than 20min and/or lower than one hour;
- a cumulative amount of energy(E) not delivered is lower than 1.5 MWh;
- a cumulative of percentage of hot unplug is lower than 5% of the totally of the equivalent electric charging sessions (relative to impacted users);
- a cumulative of saturation (P_racc) of the maximum load capacity of the electrical network is lower than 3% of the totally of the load over the period T;
- an occupancy rate (Occup) of all charging points is lower than 35%.

From at least one criterion, it may be possible to compare and/or determine the most suitable/optimal charging station for the next future T and the given area, and which will meet the needs of users of electric vehicles, such the frequentation of the users as well as the amount of provided energy while limiting the inconveniences such the waiting time for instance.

Figures 3a to 3c illustrate a method for sizing at least one compensation battery of a charging station for electric vehicles in one or several embodiments.

In particular, Figure 3a illustrates a flowchart of a method for sizing the compensation battery of a charging station. The figure 3b illustrates a statistical distribution of at least one load peak of a determined load for a charging station over a period T, and figure 3c illustrates results of simulations of different configurations of charging stations having at least one compensation battery.

This method of sizing a compensation battery may comprise several steps of the method for sizing a charging station, in particular, the steps described above in section 1. Therefore, the same numerical references indicate the same steps in both methods.

The charging station may be sized in view of operating the charging station at a future period of time T, the charging station being installed at the location of a fuel station operated over a past or current period of time N, and may comprise at least one electric charging point and being connected to an electrical network.

For instance, the charging station may be sized according to the method for sizing a charging station previously presented.

Of course, as mentioned previously, by "at the location of the fuel station", it may be understood at the same location of the fuel station, or in a location around the location of the fuel station, or a location in the same area that the location of the fuel station. Further, a same location or a same area may be interpreted as an area around a fuel station where the same vehicles could go for refueling or charging.

The method may be implemented by a device which comprises a circuit and a memory.

The memory may comprise consumption data specific to the previously operated fuel station for the past or current period of time N, and comprising a set of fuel consumption sessions.

For instance, the set of fuel consumption sessions may be relative to the fuel station operated over the past or a current period of time N, such over one year (present or past) or a plurality of years (present and/or past).

Furthermore, the memory may comprise at least one charging power probability distribution as a function of vehicle categories.

According to one or several embodiments, the consumption data and/or the least one charging power probability distribution as a function of vehicle categories may have been previously acquired, by a telecommunication network for instance.

In addition, in one or several embodiments, rather than the consumption data be specific to the previous operated fuel station or in combination with the consumption data specific to the previous operated fuel station, the consumption data may be specific to an operated fuel station having the same context (e.g. environmental, frequency of users, location, etc.) than the operated fuel station to replace/upgrade by a charging station. In addition, the consumption data may be specific to a plurality of operated fuel stations located at different positions in an area. For example, when a charging station has to be implemented in an area or a location where no fuel station operated, the consumption data of a plurality operated fuel stations may be used.

The method of sizing a compensation battery may comprise:
- converting 200 fuel consumption sessions into a set of equivalent electric charging sessions;
- for each equivalent electric charging session, determining 210 an average charging power based on the charging power probability distribution and the equivalent electric charging session.

### 3. Sizing of the Charging station - battery sizing

Following the conversion of fuel vehicles frequentation into electric vehicles frequentation described at section 1, the method of sizing a compensation battery may further comprise a step 320 of determining a sizing of the at least one compensation battery of the charging station from the average charging powers of the equivalent electric charging sessions determined for the period T, so that the battery allows to temporally increase the maximum load capacity of the electrical network when an electrical load demand of the charging station is superior to the maximum load capacity of the electrical network.

Determining the sizing may comprise simulating the response of a charging station according to a given configuration with regard to a previously determined load and transcribing this response by a set of output parameters.

As presented previously in section 2 for instance, the determined load may be considered as input parameter and may be:
- the load determined for the charging station under a load curve for instance, and/or
- the average charging powers of the equivalent electric charging sessions,
- and optionally respectively associated with the timestamp data of each equivalent electric charging sessions.

Other input parameters may be used to determine the sizing of the compensation battery of the charging station such as at least one piece of data among:
- the maximum load capacity of the electrical network,
- the maximum power allowed per charging point,
- a sizing of the charging station,
one or a plurality of existing compensation batteries with a predetermined sizing;
- a pre-sizing of at least one compensation battery.

The input parameter relative to the sizing of charging station may comprise information such the number of charging points and/or the number of existing compensation batteries already sized as well as their respective power/capacity.

One or a plurality of existing compensation batteries with a predetermined sizing may be interpreted as the charging station already comprising one or a plurality of existing compensation batteries which have to be taken into account to determine the sizing of at least one compensation battery which may be added to or replaced with the existing compensation batterie(s).

A pre-sizing of the at least one compensation battery may be interpreted as providing at least one piece of data of a sizing of the at least one compensation battery which has to be determined. Such pre-sizing may be provided from a database or may be determined by using a statistical distribution of at least one load peaks (of a load or a load curve over a period T).

The output parameters may comprise at least one output parameter among :
- a level of coverage (e.g. in percentage) in power of a number of load peaks regarding a total number of load peak having an amplitude superior or equal to a predetermined value;
- a level of coverage (e.g. in percentage) in energy of a number of load peaks regarding a total number of load peaks having an amplitude superior or equal to a predetermined value cover by a given capacity of compensation battery;
- a cumulative number of impacted users;
- an average use of the compensation battery, for instance over the period of the load of the charging station (e.g. day(s), month(s), year(s));
- a number of cycles of the compensation battery (or cumulative number of cycles);
- a cumulative amount of energy (E) not delivered.

According to one or several embodiments, in the case of the battery sizing, the definition of an impacted user may be : a user may be considered as impacted (impacted user) when the user has performed a hot unplug. As described previously, threshold values may be defined to consider that a user will perform a hot unplug during charging his vehicle. For instance, if after an increasing superior to 10% in the initial charging duration, the user is missing at least 3 kWh (supplied energy), he is considered impacted, and likely to achieve a hot unplug. Of course, another threshold values may be used for considering that a user will perform a hot unplug. For instance, the increasing in the initial charging duration may be superior or equal to 20%, 30% or 50 % and the missing of supplied energy may be at least 2, 5, 10, 15, or 20 kWh.

According to one or several embodiments, in the case of the battery sizing, the definition of the impacted user, in combination with the previous definition or taken alone, when a difference (in energy) between the quantity of energy expected by the user for his electric vehicle during his recharging session for an expected recharging session time and the quantity of energy actually supplied is superior to a predetermined threshold. For instance, each user of the number of impacted users may correspond to a user for whom a difference in energy is superior or equal to 5 kWh. Of course, another threshold values may be used for considering that a user will be impacted. For instance, the difference in energy may be superior or equal to 2, 10, 15, 20, 30. kWh.

The predetermined value for determining the level of coverage may be an input data and may be, for instance, equal or superior to the maximum capacity of the electrical network.

In order to determine some of the above output parameters, the determination of specific load peak(s) in the load of the charging station may be needed, so the method for sizing a compensation battery may comprise:
- detecting at least one load peak in the load having an amplitude superior to the maximum load capacity of the electrical network;
- determining the sizing of the at least one compensation battery of the charging station from the load determined for the period T and said at least one load peak.

According to an example, the or the plurality of detected load peaks may be in the form of a statistical distribution over the period T, and the sizing of the compensation battery may be determined on the basis of this statistical distribution.

Figure 3b illustrates such a statistical distribution of at least one load peak of a determined load for a charging station over a period T in power.

Each histogram may describe the number of times (left ordinate) in which predetermined power threshold (abscissa) is exceeded in the determined load (or load curve) of the charging station for a period T.

Each predetermined power threshold may be a relative predetermined power threshold, for instance subtracted from the value corresponding to the maximum capacity of the electrical network.

Thus, for example, there are one hundred peaks exceeding a predetermined power threshold of 20 kW, i.e. 420 kW for a value of maximum capacity of the electrical network equal to 400 kV, and less than 20 peaks exceeding a predetermined power threshold in of 200 kWh (i.e. 600 kV with a value of maximum capacity of the electrical network equal to 400 kV).

The dotted curve may be based on the histograms in percentage, and may represent the number of times in percentage where a predetermined power threshold is not exceeded (right ordinate).

Thus, for example, for twenty peaks exceeding a predetermined power threshold in power of 200 kWh, 80% of peaks do not exceed such predetermined power threshold.

Thus, from these calculations (transcribed in the curve and/or histograms), it may be possible to determine a sizing or pre-sizing of one or a set of compensation batteries so that to have a level of coverage (e.g. in power and/or energy) of the peaks superior to a determined threshold. for example, superior to 50%, or 60%, or 80%. In one or several embodiments, such pre sizing of one or a set of compensation batteries may be used as input parameter as previously described.

Based on above, it may then be possible to define at least one criterion that the determined charging station (or the configuration of the charging station), which comprises a given compensation battery (one or a plurality), must respect (or fulfill) in order to be selected. Of course, a plurality of criteria may also be defined or used.

For example, the criterion, which may be based on the above output parameters, may be among others:
- the sizing of the compensation battery is determined as such the level of coverage in power or in energy is greater than a determined threshold, for instance as covering at least 60%, preferably as covering at least at least 80%;
- the sizing of the compensation battery is determined such that the average use of the battery is greater than a determined threshold, for instance over the period of the load of the charging station (e.g. day(s), month(s), year(s));
- the sizing of the compensation battery is determined such as a cumulative number of impacted users is lower than a determined threshold;
- the sizing of the compensation battery is determined such as a cumulative number of cycles of the compensation battery is lower than a determined threshold;
- the sizing of the compensation battery is determined such as a cumulative amount of energy not delivered is lower than a determined threshold.

In one or several embodiments, the relevance of the battery compensation or the set of compensation batteries determined from the statistical distribution of at least one load peak of figure 3b may be determined or compared by using the above output parameters and /or criteria, so as to determine the most suitable compensation batteries regarding the input parameters.

Figure 3c illustrates such comparison of results of simulations of different configurations of charging stations (P_int) having at least one compensation battery in a given sector/area and for a future period T. The different configurations of a charging station may be tested by simulating the response of each configuration regarding the average charging powers of the equivalent electric charging sessions or/and the load determined according to the present disclosure as an input parameter, and optionally taking into account a second input parameter from those listed above.

For example, five configurations of a charging station may be simulated, each charging station comprising two charging points, one of which may deliver up to 50kW of power, and the other may deliver up to 175 kW of power, which are connected to an electrical network with a maximum load capacity of 250 kVA. In addition, the first configuration (P_int) further comprising no compensation battery and named "base" which may be used as a reference configuration in order to determine the sizing of at least of a compensation battery for a charging station or to determine if the charging station needs the implementation of a compensation battery. The second configuration further comprises at least one compensation battery with a capacity of 50kWh. The third configuration further comprises at least one compensation battery with a capacity of 100kWh. The fourth configuration further comprises at least one compensation battery with a capacity of 250kWh, and a fifth configuration further comprises a compensation battery with an infinite capacity and named "reinforcement". Such fifth configuration may also be used to compare the interest to use a battery or not.

Such compensation battery (power/ capacity) may have been determined, i.e. pre-sized, prior to the simulation of each configuration by using the statistical distribution of figure 3b. For instance, the capacities (and/or power) of 50, 100, 250 kWh of the compensation batteries may have been determined to present a level of coverage in power superior or equal to a determined threshold, for instance 50%.

Each response of a simulated configuration may comprise a plurality of output parameters (P_out) such as those listed above.

For example, the output parameters (such as those presented previously) may be:
- a number of impacted users(U_impct);
- a average use of the compensation battery (Bat_Us, in day in the case of figure 3c), for instance over the period of the load of the charging station (e.g. day(s), month(s), year(s));
- a not supplied energy (nt_Del_E) relative to a hot unplug for instance.

From at least one criterion based on the above output parameters, it may be possible to determine the most suitable/optimal sizing of a compensation battery for a charging station for the next future T and the given area, and which will meet the needs of users of electric vehicles.

Figure 4 is a possible embodiment for a device that enables the present disclosure.

In this embodiment, the device 400 may comprise a circuit 404 and a memory 405 to store program instructions loadable into the circuit and adapted to cause circuit 404 to carry out the steps of the present disclosure when the program instructions are run by the circuit 404.

The memory 405 may also store data and useful information for carrying the steps of the present disclosure as described above.

The circuit 404 may be for instance:
- a processor or a processing unit adapted to interpret instructions in a computer language, the processor or the processing unit may comprise, may be associated with or be attached to a memory comprising the instructions, or
- the association of a processor / processing unit and a memory, the processor or the processing unit adapted to interpret instructions in a computer language, the memory comprising said instructions, or
- an electronic card wherein the steps of the disclosure are described within silicon, or
- a programmable electronic chip such as a FPGA chip (for « Field-Programmable Gate Array »).

The device 400 may be a computer comprising the circuit and the memory.

This device may comprise an input interface 403 for the reception of at least one input parameter (such load of the charging stations, configuration(s) of the charging stations, etc.) used for the above method according to the disclosure and an output interface 406 for providing at least one output parameter such those according to the present disclosure, such output parameter(s) may be provided to an external device 407.

To ease the interaction with the device such a computer, a screen 401 and a keyboard 402 may be provided and connected to the circuit 404.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

A person skilled in the art will readily appreciate that various parameters disclosed in the description may be modified and that various embodiments disclosed may be combined without departing from the scope of the disclosure.

## Claims

1. A method for sizing at least one compensation battery of a charging station for electric vehicles, in view of operating the charging station at a future period of time T, the charging station being installed at the location of a fuel station operated over a past or current period of time N, said charging station comprising at least one electric charging point and being connected to an electrical network, the method being implemented by a device comprising a circuit and a memory, said memory comprising :
- consumption data specific to the previously operated fuel station for the period of time N, comprising a set of fuel consumption sessions; and
- at least one charging power probability distribution as a function of vehicle categories;
the method comprising:
/a/ converting (200) fuel consumption sessions into a set of equivalent electric charging sessions;
/b/ for each equivalent electric charging session, determining (210) an average charging power based on the charging power probability distribution and the equivalent electric charging session;
c/ determining (320) a sizing of the at least one compensation battery of the charging station from the average charging powers of the equivalent electric charging sessions determined for the period T, so that the compensation battery allows to temporally increase the maximum load capacity of the electrical network when an electrical load demand of the charging station is superior to the maximum load capacity of the electrical network.

2. Method according to the preceding claim, wherein the method further comprises:
/b1/ determining a load for the charging station for the period T from the average charging powers determined for the equivalent electric charging sessions;
/b2/ detecting at least one load peak in the load having an amplitude superior to the maximum load capacity of the electrical network;
/c/ determining the sizing of the at least one compensation battery of the charging station from the load determined for the period T and said at least one load peak.

3. Method according to the preceding claim, wherein the method further comprises:
/b3/ determining a statistical distribution of the at least one load peak for the period T based on the load for the charging station for the period T;
/c/ determining the sizing of the at least one compensation battery of the charging station from the statistical distribution of the at least one load peak.

4. Method according to any one of the preceding claims, in which each fuel consumption session comprises at least one piece of data relating to a quantity of fuel supplied during the session for a vehicle, and in /a/ each consumption session of fuel is converted into an equivalent electric charging session by applying a conversion of the quantity of fuel supplied to the vehicle into a quantity of energy supplied for said vehicle.

5. Method according to the preceding claim, wherein each quantity of fuel in liter is converted into a quantity of energy in kWh according to a conversion ratio R_{conv} comprised between 0,5 and 10, preferably between 1 and 6, more preferably between 1,5 and 3.

6. Method according to any one of the preceding claims, in which in /a/, a number X_{fuel} of consumption sessions are randomly selected from the set of fuel consumption sessions over the period of time N, preferably, in which the number of fuel consumption sessions randomly selected from the set is further determined from an evolution ratio Rₑᵥ between the number of electric vehicles in circulation and the total number of vehicles in circulation during the period T.

7. Method according to any of the preceding claims 4 to 6, wherein a harmonization factor K is applied on the quantity of supplied energy of each equivalent electric charging session, and the number of equivalent electric charging sessions of the set is further determined from an inverse of the harmonization factor 1/K, preferably, wherein the harmonization factor is comprised between 0.1 and 2, preferably between 0.25 and 1.

8. Method according to any one of the preceding claims wherein each equivalent electric charging session is respectively associated to a vehicle category.

9. Method according to any one of the preceding claims, wherein the memory further comprises at least one vehicle categories probability distribution as a function of a power consumption, the method further comprises :
/a1/ for each equivalent electric charging session, determining a vehicle category based on the vehicle categories probability distribution and the equivalent electric charging session.

10. Method according to any of the preceding claims 8 or 9, wherein the category of each equivalent electric charging session is determined by a draw based on the quantity of supplied energy of the equivalent electric charging session and the vehicle categories probability distribution.

11. Method according to any one of the preceding claims 8 to 10, wherein the average charging power of each equivalent electric charging session is determined by a draw based on the vehicle category of the equivalent electric charging session and the charging power probability distribution.

12. Method according to any of the preceding claims, wherein the memory further comprises a set of segmented charging sessions over a past or current period of time M, the charging sessions being segmented by vehicle categories, and the at least one charging power probability distribution as the function of vehicle categories is determined based on the segmented charging sessions, preferably, wherein the at least one vehicle categories probability distribution as a function of a power consumption is determined based on the segmented charging sessions.

13. Method according to claim 12, in which each segmented charging session comprises a piece of data relative to a maximum battery capacity and/or a maximum charging power and/or at least one piece of data relative to a time stamp.

14. Method according to any one of the preceding claims, in which the sizing of the at least one compensation battery of the charging station is also determined so that to take into account at least one piece of data from at least one data chosen among:
- the maximum load capacity of the electrical network;
- the maximum power allowed per charging point;
- a sizing of the charging station;
- one or a plurality of existing compensation batteries with a predetermined sizing;
- a pre-sizing of at least one compensation battery.

15. Method according to any of the preceding claims, wherein the sizing of the at least one compensation battery is determined as fulfilling at least one criterion, preferably, wherein the at least one criterion comprises at least one of the following:
- the sizing of the compensation battery is determined as such the level of coverage in power or in energy is greater than a determined threshold;
- the sizing of the compensation battery is determined such that the average use of the battery is greater than a determined threshold;
- the sizing of the compensation battery is determined such as a cumulative number of impacted users is lower than a determined threshold;
- the sizing of the compensation battery is determined such as a cumulative number of cycles of the compensation battery is lower than a determined threshold;
- the sizing of the compensation battery is determined such as a cumulative amount of energy not delivered is lower than a determined threshold.

16. A computer program comprising instructions which, when the program is executed by a computer, cause the computer to carry out the method of any preceding claims 1 to 15.

17. A device for sizing at least one compensation battery of a charging station for electric vehicles, in view of operating the charging station at a future period of time T, said charging station having at least one electric charging point connected to an electrical network having a maximum load capacity, said charging station being installed at the location of a fuel station operated over a past or current period of time N, the device comprising a memory, said memory comprising :
- consumption data specific to the previously operated fuel station for the period of time N, comprising a set of fuel consumption sessions, and
- at least one charging power probability distribution as a function of vehicle categories,
the device comprising:
a/ a circuit for converting fuel consumption sessions into a set of equivalent electric charging sessions,
/b/ a circuit for determining an average charging power based on the charging power probability distribution and the equivalent electric charging session for each equivalent electric charging session,
/c/ a circuit for determining a sizing of the at least one compensation battery of the charging station from the average charging powers of the equivalent electric charging sessions determined for the period T, so that the compensation battery allows to temporally increase the maximum load capacity of the electrical network when an electrical load demand of the charging station is superior to the maximum load capacity of the electrical network.
